# EUROPEAN PATENT APPLICATION

(11) **EP 3 367 066 A1**
(43) Date of publication of application: **29.08.2018**
(21) Application number: 18157969.9
(22) Date of filing: 21.02.2018
(51) Int. Cl.: G01C 23/00, G08G 5/00

(54) **SYSTEM AND METHOD TO DECIPHER AND DISPLAY ADVISORY INFORMATION**

(30) Priority: 27.02.2017 US 201715443168
(71) Applicant: Honeywell International Inc., Morris Plains, NJ 07950 (US)
(72) Inventor: PANCHANGAM, Sunitha, Morris Plains, NJ New Jersey 07950 (US); S, Anoop, Morris Plains, NJ New Jersey 07950 (US); GURAJAPU, Prasanna Murthy, Morris Plains, NJ New Jersey 07950 (US); K, Nathan, Morris Plains, NJ New Jersey 07950 (US)
(74) Representative: Houghton, Mark Phillip

(57) **Abstract**

A method of supplementing high design assurance level system information for an aircraft is provided. The method includes dynamically gathering low design assurance level information from the internet with a communication system based on a requests by a cockpit browser. The low design assurance level information is parsed with the high design assurance level information with a parser of the cockpit browser to generate combined assurance level information. The combined assurance level information is displayed on a display.

## Description

### BACKGROUND

Vehicle travel can be effected by meteorological events and other events the vehicle encounters during travel. Hence, systems that inform a vehicle traveling in an area subject to a meteorological event or other event are desired. For example, in avionic travel, volcanic ash clouds can have a serious effect on travel of the aircraft. To deal with this type of situation, the aircraft crew needs dynamic real time situational awareness to help navigate the aircraft away from the ash cloud. This is possible only if current volcanic advisories are assessable to the crew at any point during the flight.

For the reasons stated above and for other reasons stated below which will become apparent to those skilled in the art upon reading and understanding the present specification, there is a need in the art for and effective and effect system and method of providing the advisory data to a vehicle.

### SUMMARY OF INVENTION

The above-mentioned problems of current systems are addressed by embodiments of the present invention and will be understood by reading and studying the following specification. The following summary is made by way of example and not by way of limitation. It is merely provided to aid the reader in understanding some of the aspects of the invention. Embodiments provide a system and methods of gathering low design assurance level information regarding advisory information and the like and combing the information with high design assurance level information without effecting other function of the vehicle.

In one embodiment, a method of providing advisory information gathered from the internet to a vehicle is provided. The method includes receiving high design assurance level system information at a vehicle embedded system through a first communication system. The vehicle embedded system is used, at least in part, to create a travel path of the vehicle. The low design assurance level information is received through a second communication system. The second communication system is in communication with the internet. Advisory data is dynamically collected from select internet sites through the second communication system with a browser. The browser is further configured to help, at least in part, host the low design assurance level information from the second communication system on the vehicle embedded system without effecting other functions of the vehicle embedment system that are based at least in part on the high design assurance level system information. The collected advisory data received through the second communication system is used to determine imminent and forecasted threats along the created travel path of the vehicle. The determined imminent and forecasted threats relating to the advisory data are displayed on at least one display overlaying the created travel path of the vehicle.

In another embodiment, a method of supplementing high design assurance level system information for an aircraft is provided. The method includes dynamically gathering low design assurance level information from the internet with a communication system based on a requests by a cockpit browser. The low design assurance level information is parsed with the high design assurance level information with a parser of the cockpit browser to generate combined assurance level information. The combined assurance level information is displayed on a display.

In still another embodiment, an information generating system for a vehicle is provided that includes a first communication system, a second communication system a vehicle embedded system and at least one display. The first communication system is configured to receive high design assurance level system information. The second communication system is configured to receive low design assurance level system information. The vehicle embedded system is in communication with the first communication system and the second communication system. The vehicle embedded system includes at least one memory and at least one controller. The at least one memory is used to store at least operating instructions, a browser with parsing functions, the high design assurance level system information and the low design assurance level system information. The at least one controller is configured to implement the browser to collect advisory data through the second communication system and parse the collected advisory data with high assurance level system information to create combined assurance level information. The at least one display is used to display the combined assurance level information.

### BRIEF DESCRIPTION OF THE DRAWINGS

The present invention can be more easily understood and further advantages and uses thereof will be more readily apparent, when considered in view of the detailed description and the following figures in which:
Figure 1 is an illustration of an aircraft communication system in an embodiment;
Figure 2 illustrates an aircraft operational system block diagram of an embodiment;
Figure 3 illustrates a merging of information flow diagram of an embodiment;
Figure 4 illustrates a different assurance information merging system block diagram of an embodiment;
Figure 5 illustrates a cockpit browser flow diagram of an embodiment;
Figure 6 is a screen shot of a browser window screen on a Multi-Functional Display in an embodiment; and
Figure 7 is screen shot of a Multi-Functional Display and a Vertical Situation Display of an embodiment.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention provide a system and method of combining high design assurance level information communicated through a first communication system with low design assurance level information communicated through a second communication system without affecting other functions of vehicle embedded system that are based at least in part on the high design assurance level system information. The systems and methods described below are described as applying to an aircraft but embodiments can be applied to any type of vehicle that implements high designed assurance level information.

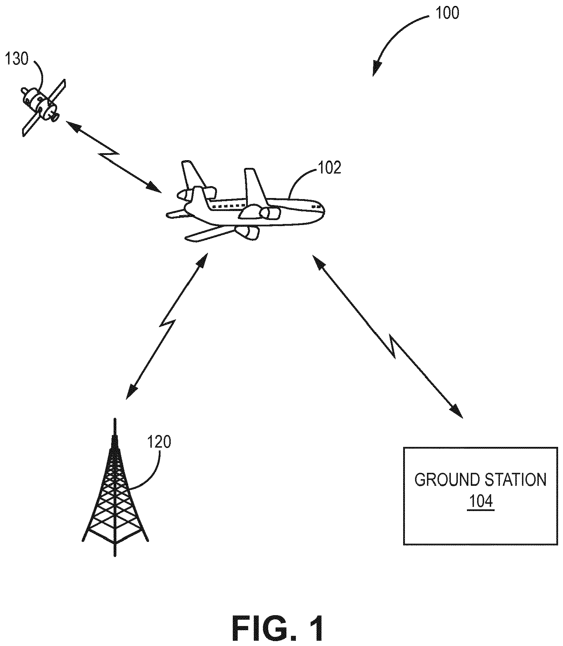

An example embodiment that is applied to an aircraft communication system 100 is illustrated in Figure 1. Figure 1 illustrates an aircraft 102 that receives communication signals from a plurality of different sources. For example, a communication system between the aircraft 102 and a ground station 104 would typically implement a secure communication system such as Aircraft Communication Addressing Reporting System (ACARS). ACARS typically communicates with relatively long range radio or satellite signals. This system would include communications with high design assurance level information that would be used for navigation, systems control, system health, etc. Other communications, include, but are not limited to, cellular signals from cell towers 120 and satellite signals from satellites 130. The communication signals from these sources may include low design assurance level information. As discussed above, in embodiments, low design assurance level information is merged with high design assurance level information in a way that does not affect other functions of vehicle embedded systems that are based at least in part on the high design assurance level system information.

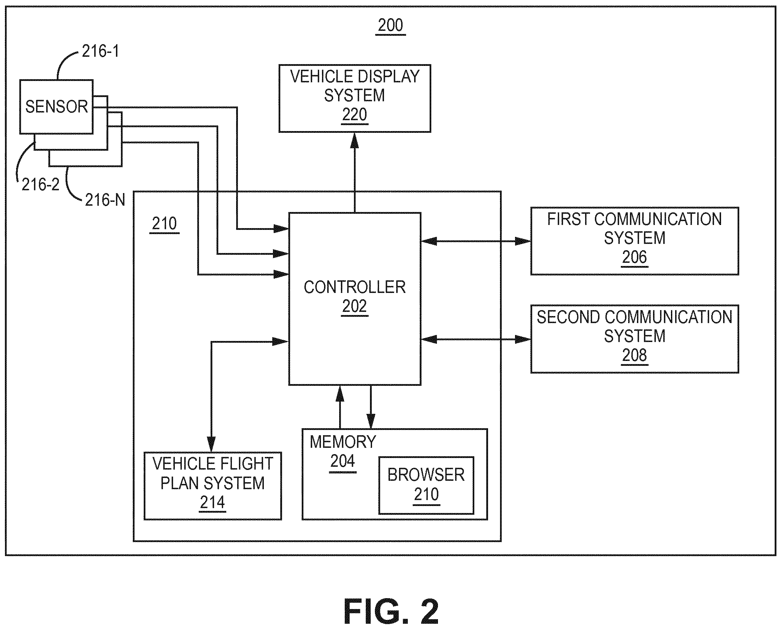

Figure 2 illustrates a block diagram of some aircraft operational systems 200 of an embodiment. The aircraft operational systems 200 includes a vehicle embedded system 210 that includes at least a controller 202 and a memory 204. In general, the controller 202 may include any one or more of a processor, microprocessor, a digital signal processor (DSP), an application specific integrated circuit (ASIC), a field program gate array (FPGA), or equivalent discrete or integrated logic circuitry. In some example embodiments, controller 202 may include multiple components, such as any combination of one or more microprocessors, one or more controllers, one or more DSPs, one or more ASICs, one or more FPGAs, as well as other discrete or integrated logic circuitry. The functions attributed to the controller may be embodied as software, firmware, hardware or any combination thereof. The controller 202 may be part of a system controller or a component controller. The memory 204 may include computer-readable operating instructions that, when executed by the controller 202 provides function of the aircraft operational systems. Such functions may include the functions of communications described below. The computer readable instructions may be encoded within the memory 204. Memory 204 may comprise computer readable storage media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

The aircraft operational systems 200 further include a plurality of sensor 216-1 through 216-n that provide such sensor data as, but not limited to, radar sensor data, aircraft performance sensor data, location sensor data and system health data to the controller 210 of the embedded system 210. Also shown in the embedded system 210 iof Figure 2, is a vehicle flight plan system 214. The vehicle flight plan system 214 is used provide a flight plan for the aircraft. The flight plan system 214 may include its own processor and memory or may use controller 202 and memory 204. Coordinates for a flight plan may be uploaded to the flight plan system 214 prior to take off of the aircraft and may be updated in flight based on pilot input or received updated flight plan communications. For example, first communication system 206 may be used to communicate high design assurance level information such as updated flight plan information to the vehicle flight plan system 214 and the controller 202. This first communication system 206 may be an ACARS that communicates with relatively long range radio or satellite signals.

The aircraft operational systems 200 further includes a second communication system 208. The second communication system 208 may communicate with low design assurance level information, examples of such are provided below in detail, via cell towers, satellite, etc. as discussed above. The aircraft operational systems 200 further includes a browser 210 with parsing functions. In one embodiment the browser 219 is stored in memory 204 an implemented by the controller 202. In other embodiments the browser 210 may be stored in another memory and implemented by another controller. The communications system 206 and 208 include transmitters and receivers.

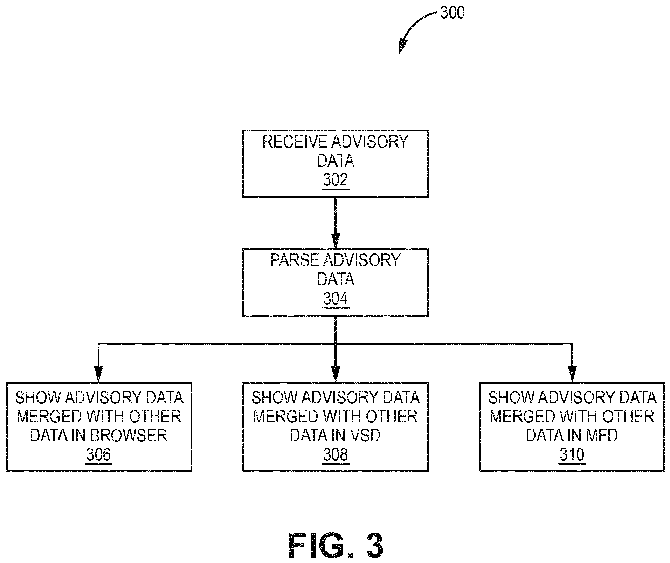

Figure 3 illustrates a high level merging of the information flow diagram 300 of an embodiment. The merging of the information flow diagram 300 is illustrated as blocks in a process. The information described in Figure 3 relates to advisory data. For example, the advisory data may relates to volcanic ash cloud data, weather data and other natural and unnatural data that may be of concern or interest during the flight path. Other types of information are contemplated where high design assurance level system information may be combined with low design assurance level system information. In block 302, advisory data is received by the second communication system 206. The advisory data is then parsed at block 304. This is done with a parser of the browser 210. The parser decodes the advisory data received by the second communication system 206 into an understandable format and presents the information with the high assurance level system information to the pilot for situational awareness. In the embodiment illustrated in Figure 3, this includes showing the advisory data merged with other data (the high design assurance level system information) in a browser screen at block 306. The advisory data merged with other data (the high design assurance level system information) is also shown in a Vertical Situation Display (VSD) at block 308. Moreover, in this example embodiment, the advisory data merged with other data (the high design assurance level system information) is also shown in a Multi-Functional Display (MFD) at block 310.

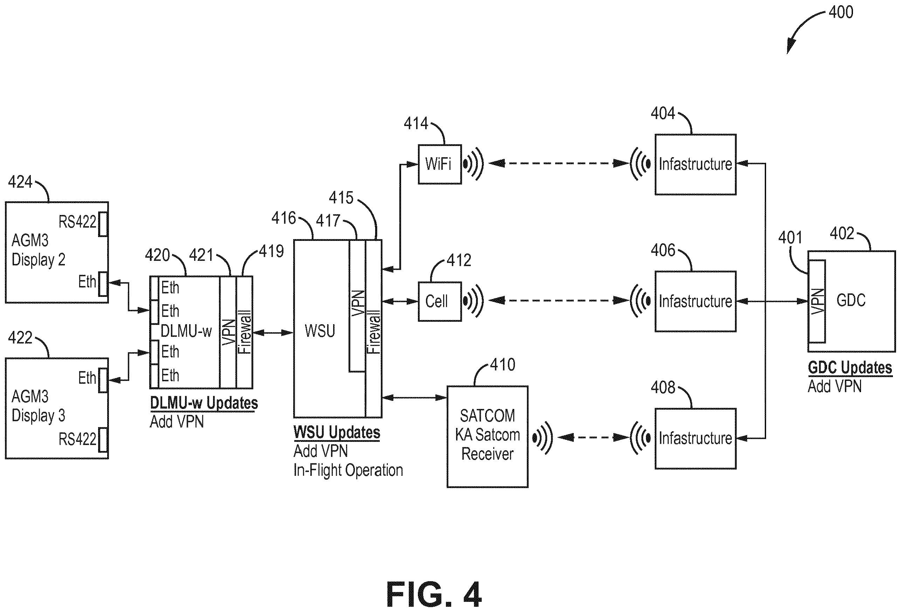

Referring to Figure 4, a different information assurance level merging system 400 of an embodiment of an embodiment is illustrated. This example embodiment, illustrates the use of a Global Drive Control (GDC) 402 that provides access to the World Wide Web (internet). The GDC 402 includes a virtual private network (VPN) 401. The system 400 includes a WiFi infrastructure 404 that is in communication with the GDC 401. The WiFi infrastructure 404 in turn is in wireless communication with a WiFi communication transceiver 414. Example system 400 also includes a cellular infrastructure 406 that is in communication with the GDC. The cellular infrastructure 404 in turn is in wireless communication with a cellular communication transceiver 412. Moreover, example system 400 further includes a satellite infrastructure 408 that is in communication with the GDC. The satellite infrastructure 408 in turn is in wireless communication with a satellite transceiver 410. A Wireless Subscriber Unit (WSU) 416 is used to interface communications between the transceivers 410, 412 and 414 and a Data Loader Management Unit (DLMU) with memory 420. The WSU 416 includes a firewall 415 and a VPN 421. The DLMU 420 also includes a firewall 419 and VPN 418. The different information assurance level merging system 400 of this embodiment includes a first Advance Graphic Module (AGM) 422 and a second AGM 424. The AGMs 422 and 424 provide requests to the WSU 416 or DLMU with memory 420 and get data from the WSU 416 or the DLMU with memory 420. In an embodiment, the DLMU with memory 420 and the AGMs 422 and 424 are part of the vehicle embedded system 210 of Figure 2 and the WSU 416 and the transceivers 410, 412 and 414 are part of the second communication system 208. In one embodiment the memory of the DLMU with memory 420 is part of memory 204.

In an embodiment, the browser 210 is a Digital Engine Operating System (DEOS) application that runs an AGM in a partition of the memory 204. The DEOS application takes care of memory partitioning so that lower level browser applications do not impact other sub system. Additionally a layer may be implemented to ensure data that is coming in from the lower level browser application does not impact higher level data so that data coupling with security can be achieved. Memory portioning may be done at system generation time. This ensures that no two different processes use each other's memory partition. Although this may cause internal fragmentation within the memory, it is a secure way to protect critical applications.

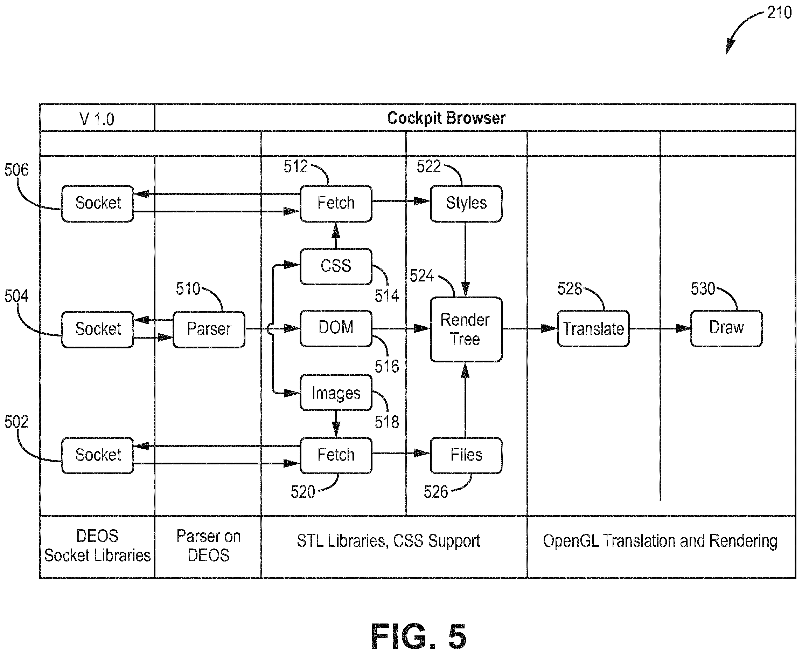

Figure 5 illustrates a cockpit browser flow diagram 210 of an embodiment. The parser 510 on the DEOS is in communication with socket 504 in the DEOS socket libraries. Socket 504 is a link between the browser and the WSU to pass low design assurance level information from the second communication system. The parser 510 parses received information into Cascading Style Sheets (CSS) 514, Document Object Model (DOM) 516 and images 518. The CSS 514 includes elements of document presentation such as layout, colors and fonts. An output of CSS 514 is combined with style information received at socket 506 relating to high design assurance level information at the fetch 512 step and is provided to styles 522 step which is in turn provided to a render tree 524. The DOM 516 is an interface that provides a representation of a document as a structured tree that further defines access to the tree so changes to a document structure, style and content can occur. An output of DOM 516 is provided to the render tree 524. The images at image 518 step, that are parsed out with parser 510 are combined at fetch 520 step with images from high design assurance level information from socket 502 and provided to files 526 step which then passes them on to the render tree 524. The render tree 524 takes the data from styles 522, DOM 516 and files 526 and creates a visual elements in the order in which they will be displayed. It provides a visual representation of how the information will be presented. This information is provided to translate 528 step which provides translation functions to the draw 530 step. The draw 530 step is implemented by the at least one of the graphic modules 422 and 424.

An example of advisory information that can be received from the second communication system 208 (and hence low design assurance level information) is volcanic ash advisories. Flying through volcanic ash clouds is a real safety concern since the ash can damage engines of an aircraft. Embodiments provide a system that allows a crew of an aircraft to access advisories (such as a volcanic advisory) during all phases of a flight. It allows for the dynamically updating of the advisories thus helping the crew to negotiate alternative routes with the Air Traffic Control (ATC), avoid costly rerouting, avoid safety issues and damage to the aircraft. In embodiments, a current lateral flight plan that falls on a respective advisory location is highlighted. As discussed above, the system is built on top of the cockpit browser. In an embodiment, the altitudes at which the ash clouds are present are provided in different colors on a Vertical Situation Display (VSD) so the crew can plan a detour well in advance. Further in another embodiment, a Multi-Functional Display (MFD) is used to display the advisory. This helps the crew to choose the closest airport that is not affected so the aircraft can be diverted.

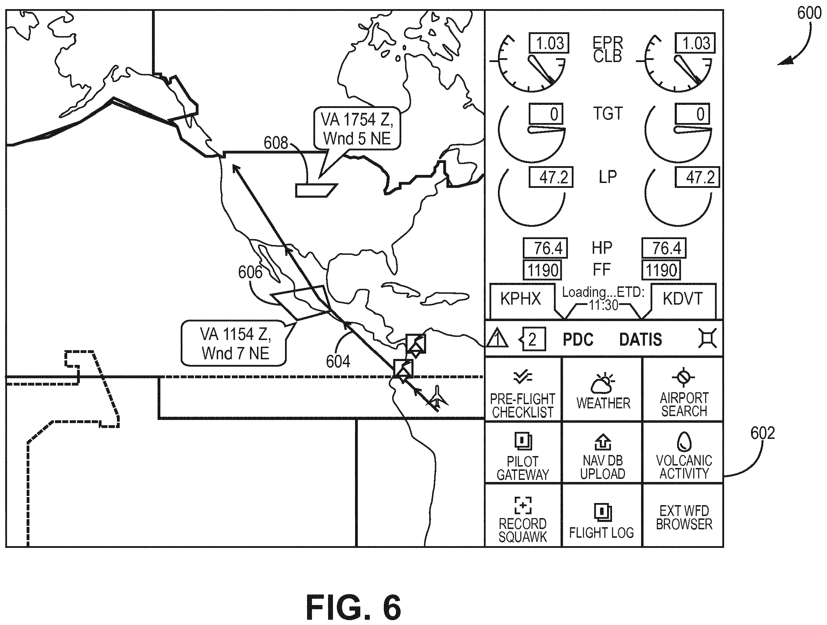

During any phase of the flight, embodiments provide the crew with an "advisory" link such as a "volcanic advisory" button that can be activated. Upon activation, the browser 210 collects data from the web as described above. For example, relating to the "volcanic advisory" example, the browser 210 may access the National Oceanic and Atmospheric Administration (NOAA) web site which tracks volcanic ash clouds. Information collected by the browser 210 is parsed as described above and then the parsed information is shown on the browser window where the entire flight plan is overlaid on 2-D/3D maps. For example, please see Figure 6. Figure 6 illustrates a browser window screen shot in a MFD 600 of an example embodiment. As illustrated the MFD 600 provides a volcanic activity button 602 upon which a crew member can activate to get volcanic advisory information. Once activated, the flight path 604 is shown along with areas associated with advisory information, such as volcanic advisory areas 606 and 608 illustrated in Figure 6. As illustrated, the current flight plan 604 crosses the first volcanic advisory area 606 hence, a rerouting of the flight plan may take place. In an embodiment, the parsed report contains the then current volcanic ash information, the forecasted volcanic ash information and the wind information. As stated above, this information is available to the crew at phases of the flight including preflight thus helping the crew to plan the flight well in advance. This will help the crew and airline avoid costly rerouting, avoid safety issues to avoid damage to the aircraft.

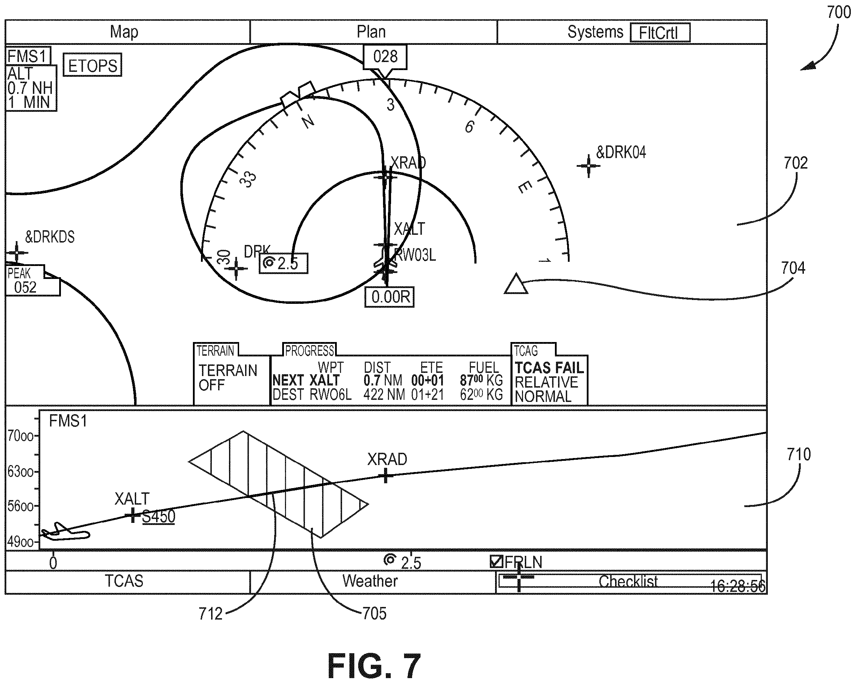

As discussed above, the advisory information can also be displayed on the VSD. An example of a combination MFD/VDS screen shot 700 is illustrated in Figure 7. Regarding Figure 7, the flight crew initializes the flight plan and performance parameters of the aircraft. After the Flight Management System (FMS) constructs the vertical profile, an embodiment parses the advisory information and represents the information on the VSD at the appropriate altitudes. The VSD may show the forecasted positions (relating to the advisory information) at various times so the crew can know if the forecasted positions will be a threat to the flight. In an embodiment, a same color code as represented in an advisory will be used. This will help the crew to plan detours based on the altitude the advisory information is effecting. An advisory information representation on the VSD may be done by connecting the lateral position along with the altitude position. The symbology may be the position of the cloud (in the volcanic ash example) and the corresponding altitude as shown in Figure 7. Figure 7 illustrates the representation of an advisory area 704 of an active volcano on the MFD 702. The advisory area 705 is illustrated in the VSD 710. In this embodiment, the path crossing portion 712 is highlight as the same color as the advisory area 704 of the MFD 702.

In a volcanic advisory information embodiments, an embodiment, further enhances the situational awareness on the MFD 702 by indicating the situational awareness on the MFD 702 by indicating the active volcano that erupted and caused ash. The symbol used to show the volcano is a triangle in the embodiment. Moreover, in an embodiment, a red color triangle may be used to indicate the volcano. Only the active volcano that has erupted will be shown so as to avoid clutter. This arrangement again will alert the crew as to which volcano along the flight path may affect the aircraft.

Embodiments can be extended to datalink operations where a particular aircraft has only datalink capacity. If the particular airport has only datalink capabilities then the advisory information may be accessed by an ATC/Airline Operational Communication (AOC) uplink and sent to the cockpit. The parser will parse this datalink advisory information and show it on a 2D map which the crew can review during preflight and plan an appropriate detour if needed. The parsed report will be used to show the appropriate advisories on the MFD and VSD as explained above.

### EXAMPLE EMBODIMENTS

Example 1 is a method of providing advisory information gathered from the internet to a vehicle. The method includes receiving high design assurance level system information at a vehicle embedded system through a first communication system. The vehicle embedded system is used, at least in part, to create a travel path of the vehicle. The low design assurance level information is received through a second communication system. The second communication system is in communication with the internet. Advisory data is dynamically collecting from select internet sites through the second communication system with a browser. The browser is further configured to help, at least in part, host the low design assurance level information from the second communication system on the vehicle embedded system without effecting other functions of the vehicle embedment system that are based at least in part on the high design assurance level system information. The collected advisory data received through the second communication system is used to determine imminent and forecasted threats along the created travel path of the vehicle. The determined imminent and forecasted threats relating to the advisory data are displayed on at least one display overlaying the created travel path of the vehicle.
Example 2, includes the method of Example 1, wherein the browser is an aircraft browser.
Example 3 includes the method of any of the Examples 1-2, further comprising; partitioning memory so that the low design assurance level information does not impact other systems of the vehicle.
Example 3 includes the method of any of the Examples 1-3, further comprising; using a layer to ensure the low design assurance level information does not impact other systems of the vehicle.
Example 5 includes the method of any of the Examples 1-4, wherein displaying the determined imminent and forecasted threats relating to the advisory data on at least one display overlaying the created travel path of the vehicle, further comprises; displaying the determined imminent and forecasted threats relating to the advisory data on at least one of a multi-functional display and a vertical situation display.
Example 6 includes the method of any of the Examples 1-5, wherein displaying the determined imminent and forecasted threats relating to the advisory data on at least one display overlaying the created travel path of the vehicle, further comprises; displaying areas associated with the determined imminent and forecasted threats in a select color on a multi-functional display; and displaying path crossing portions of the travel path of the vehicle in vertical situation display in the same color as the areas associated with the determined imminent and forecasted threats on a multi-functional display.
Example 7 includes a method of supplementing high design assurance level system information for an aircraft. The method includes dynamically gathering low design assurance level information from the internet with a communication system based on a requests by a cockpit browser. The low design assurance level information is parsed with the high design assurance level information with a parser of the cockpit browser to generate combined assurance level information. The combined assurance level information is displayed on a display.
Example 8 includes the method of claim 7, further comprising; partitioning memory so that the low design assurance level information does not impact other systems of the vehicle.
Example 9 includes the method of any of any of the Examples 7-8, further comprising; using a layer to ensure the low design assurance level information does not impact other systems of the vehicle.
Example 10 includes the method of any of the Examples 7-9, wherein the low design assurance level information relates to advisory data and the high design assurance level system information relates to a flight path, the combined assurance level information including a location of the advisory data in relation to the flight path.
Example 11 includes the method of any of the Examples 7-10, wherein, the advisory data relates to volcanic ash clouds.
Example 12 is an information generating system for a vehicle that includes a first communication system, a second communication system a vehicle embedded system and at least one display. The first communication system is configured to receive high design assurance level system information. The second communication system is configured to receive low design assurance level system information. The vehicle embedded system is in communication with the first communication system and the second communication system. The vehicle embedded system includes at least one memory and at least one controller. The at least one memory is used to store at least operating instructions, a browser with parsing functions, the high design assurance level system information and the low design assurance level system information. The at least one controller is configured to implement the browser to collect advisory data through the second communication system and parse the collected advisory data with high assurance level system information to create combined assurance level information. The at least one display is used to display the combined assurance level information.
Example 13 is the information generating system for a vehicle of claim 12, further comprising; an operator input in communication with the at least one controller to selectively request the browser collect the advisory data.
Example 14 is the information generating system for a vehicle of any of the claims 12 -13, wherein the first communication system uses an Aircraft Communication Addressing Reporting System.
Example 15 is the information generating system for a vehicle of any of the claims 12 -14, wherein the second communication system further comprises; a wireless subscriber unit configured to interface communication signals between the vehicle embedded system and a plurality of communication services.
Example 16 is the information generating system for a vehicle of any of claim 15, wherein the plurality of communication services include at least one of a WiFi service, a cellular service and a satellite service.
Example 17 is the information generation system for a vehicle of any of the claims 12-16, further wherein the at least one controller includes and at least one memory includes a data loader management unit with memory.
Example 18 is the information generating system for a vehicle of any of the claims 12-17, further comprising; at least one advanced graphic module used to generate the combined information on the at least one display.
Example 19 is the information generating system for a vehicle of any of the claims 12-18, wherein the at least one display further comprises; an avionic multi-function display and a vertical situation display.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method of providing advisory information gathered from the internet to a vehicle (102), the method comprising:
receiving high design assurance level system information at a vehicle embedded system (210) through a first communication system (206);
using at least in part the vehicle embedded system (210) to create a travel path of the vehicle (102);
receiving low design assurance level information through a second communication system (208), the second communication system (208) in communication with the internet;
dynamically collecting advisory data from select internet sites through the second communication system (208) with a browser (210), the browser (210) further configured to help at least in part host the low design assurance level information from the second communication system (208) on the vehicle embedded system (210) without effecting other functions of the vehicle embedment system that are based at least in part on the high design assurance level system information;
parsing the collected advisory data received through the second communication system (208) to determine imminent and forecasted threats along the created travel path of the vehicle (102); and
displaying the determined imminent and forecasted threats relating to the advisory data on at least one display (220) overlaying the created travel path of the vehicle (102).

2. The method of claim 1, wherein the browser (210) is an aircraft browser.

3. The method of claim 1, further comprising:
partitioning memory (204) so that the low design assurance level information does not impact other systems of the vehicle.

4. The method of claim 1, further comprising:
using a layer to ensure the low design assurance level information does not impact other systems of the vehicle (102).

5. The method of claim 1, wherein displaying the determined imminent and forecasted threats relating to the advisory data on at least one display (220) overlaying the created travel path of the vehicle (102), further comprises:
displaying the determined imminent and forecasted threats relating to the advisory data on at least one of a multi-functional display (600) and a vertical situation display (700).

6. An information generating system for a vehicle (102) comprising:
a first communication system (206) configured to receive high design assurance level system information;
a second communication system (208) configured to receive low design assurance level system information;
a vehicle embedded system (210) in communication with the first communication system (206) and the second communication system (208), the vehicle embedded system (210) including,
at least one memory (204) to store at least operating instructions, a browser (210) with parsing functions, the high design assurance level system information and the low design assurance level system information, and
at least one controller (202) configured to implement the browser (210) to collect advisory data through the second communication system (208) and parse the collected advisory data with high assurance level system information to create combined assurance level information, and
at least one display (220) to display the combined assurance level information.

7. The information generating system for a vehicle of claim 6, further comprising:
an operator input in communication with the at least one controller (202) to selectively request the browser (210) collect the advisory data.

8. The information generating system for a vehicle (102) of claim 6, wherein the first communication system (206) uses an Aircraft Communication Addressing Reporting System.

9. The information generating system for a vehicle (102) of claim 12, wherein the second communication system (208) further comprises:
a wireless subscriber unit (416) configured to interface communication signals between the vehicle embedded system (210) and a plurality of communication services.

10. The information generating system for a vehicle of claim 9, wherein the plurality of communication services include at least one of a WiFi service, a cellular service and a satellite service.
